# EUROPEAN PATENT SPECIFICATION

(11) **EP 3 153 676 B1**
(45) Date of publication and mention of the grant of the patent: **13.03.2019**
(21) Application number: 15802895.1
(22) Date of filing: 26.05.2015
(51) Int. Cl.: F01N 3/08, B01D 53/94, F01N 3/20

(54) **MARINE ENGINE EXHAUST GAS PURIFICATION SYSTEM**
SCHIFFSMOTORABGASREINIGUNGSSYSTEM
SYSTÈME DE PURIFICATION DES GAZ D'ÉCHAPPEMENT D'UN MOTEUR MARIN

(30) Priority: 03.06.2014 JP 2014114468
(43) Date of publication of application: 12.04.2017
(73) Proprietor: Hitachi Zosen Corporation, Osaka-shi, Osaka 559-8559 (JP)
(72) Inventor: TANAKA, Hiroshi, Suminoe-ku Osaka-shi Osaka 559-8559 (JP); BABA, Shinji, Suminoe-ku Osaka-shi Osaka 559-8559 (JP); KAWAGUCHI, Hiroaki, Suminoe-ku Osaka-shi Osaka 559-8559 (JP); SHIROYAMA, Kouji, Suminoe-ku Osaka-shi Osaka 559-8559 (JP)
(74) Representative: Grünecker Patent- und Rechtsanwälte PartG mbB
(86) International application number: PCT/JP2015/064982
(87) International publication number: WO 2015/186559

(56) References cited:
- EP-A1- 2 332 826
- WO-A1-99/49957
- JP-A- H03 196 817
- JP-A- 2010 071 148
- US-A1- 2002 023 433
- US-A1- 2011 126 514

## Description

### Technical Field

The present invention relates to a marine engine exhaust gas purification system.

### Background Art

According to the International Convention for the Prevention of Pollution from Ships (MARPOL), which is an international convention covering prevention of, for example, marine pollution by ships, NOx emissions from ships newly built from 2016 are supposed to be reduced from an existing limit to about 80% in an emission control area (ECA).

Conventionally, SCR (selective catalytic reduction) has been used to reduce NOx emissions from transport systems. Transport systems according to SCR include vehicles for ground transportation. Such vehicles can be replenished with urea water for a reducer at multiple locations and thus can be quickly replenished in the event of a shortage of urea water during driving. In contrast, ships having larger engine displacements than vehicles require a large quantity of urea water. Since ships can be replenished with urea water only during port visit, urea powder advantageous in capacity reduction has been examined as a reducer for SCR.

As a technique for using urea powder on ships, for example, Patent Literature 1 discloses an exhaust gas purification system that optionally produces urea water using a permanent fresh water generator on a ship. This can purify NOx emissions while achieving space savings and load weight reduction of ships that cannot be replenished with urea water on the sea.

### Citation List

### Patent Literatures

Patent Literature 1: Japanese Patent Laid-Open No. 2010-71148
Patent Literature 2: Japanese Utility Model Publication No. 7-11147
Patent Literature 3: Japanese Utility Model Laid-open No. 8-1436

### Summary of Invention

### Technical Problem

In a ship having a high humidity, transported urea powder may be deposited in a urea powder storage tank because of the moisture adsorption or the weight of the urea powder under improper control. Thus, Patent Literature 1 proposes the provision of a dryer in a urea powder storage tank (raw material hopper), which may disadvantageously lead to a complicated device.

Patent Literatures 2 and 3 disclose urea solution production equipment including a solution tank containing urea water for a saturated solution, a mixing unit that mixes water and the urea water introduced from the solution tank, and a setting unit that properly sets a quantity of water supplied to the mixing unit and a quantity of urea water from the solution tank so as to produce urea water with a desired concentration in the mixing unit. Unfortunately, the inventions of Patent Literatures 2 and 3 also require a urea powder storage tank (urea receiver tank) to produce urea water for a saturated solution, preventing removal of urea powder deposited in the urea powder storage tank. Furthermore, Patent Literatures 2 and 3 require a solution tank (dissolver) and an agitation system (agitator) that mix urea powder and water to make urea water. The solution tank inevitably has a large capacity because the solution tank receives urea powder and water and sufficiently stirs the mixture. Moreover, the agitation system has a complicated configuration including a screw and a drive mechanism for the screw. Thus, wear on components may cause problems and need to be prevented by sufficient maintenance, leading to extremely high initial and maintenance cost.

In other words, disadvantageously, the conventional system has a large size because of a large-capacity solution tank and has a complicated configuration including a device for preventing deposition of urea powder and an agitation system for urea water.

An object of the present invention is to provide a marine engine exhaust gas purification system that can be reduced in size by eliminating the need for a large-capacity solution tank and can be simplified in the overall configuration.

### Solution to Problem

In order to solve the problem, a marine engine exhaust gas purification system according to appended claim 1 is a marine engine exhaust gas purification system that purifies exhaust gas from a marine engine through reduction by a reductor of a ship including a solvent refiner, the marine engine, and the reductor, the purification system comprising:
a powder storage container that stores reducer powder for the reduction;
a solvent feed line that supplies, into the powder storage container, a solvent refined by the solvent refiner,
the powder storage container allowing production of a high concentration solution by dissolving the reducer powder in the solvent supplied through the solvent feed line,
the powder storage container connecting, from an upstream side, a measuring container that measures a concentration of the high concentration solution, and a regulating container that regulates the concentration of the high concentration solution so as to produce a regulated solution from the high concentration solution,
a first solution feed line that supplies the high concentration solution produced by the powder storage container to the measuring container,
a second solution feed line that supplies the high concentration solution of the measuring container to the regulating container,
a regulated solution feed line that supplies the regulated solution of the regulating container to the reductor, and
the reductor reducing the exhaust gas by supplying the regulated solution to the exhaust gas, the regulated solution being supplied through the regulated solution feed line.

A marine engine exhaust gas purification system according to appended claim 2, in the marine engine exhaust gas purification system according to the first invention, further includes a circulating line that allows the high concentration solution in the measuring container to return to the powder storage container, and a dilution line that allows supply of the solvent refined by the solvent refiner to the regulating container,
wherein if the measured high concentration solution has a concentration lower than a predetermined range, the measuring container returns the high concentration solution to the powder storage container through the circulating line, and
if the high concentration solution has a concentration higher than the predetermined range, the regulating container dilutes the high concentration solution with the solvent from the dilution line.

A marine engine exhaust gas purification system according to appended claim 3, in the marine engine exhaust gas purification system according to one of the first and second inventions, wherein the powder storage container includes a temperature controller that controls a temperature in the powder storage container, and
the temperature controller keeps an interior of the powder storage container at a temperature where dissolution of the reducer powder in the solvent is accelerated and generation of poisonous gas from the reducer powder is prevented.

A marine engine exhaust gas purification system according to appended claim 4, in the marine engine exhaust gas purification system according to one of the first and second inventions, further comprising a penetration pipe that is connected to the solvent feed line in the powder storage container causing the solvent to penetrate the reducer powder, the penetration pipe extending from a top surface to a bottom of the reducer powder in the powder storage container, and
the penetration pipe having a large number of openings for penetration of the solvent from the top surface to the bottom of the reducer powder.

A marine engine exhaust gas purification system according to appended claim 5, in the marine engine exhaust gas purification system according to one of the first and second inventions, wherein the powder storage container has a large number of air holes or an air supply pipe, and
the air holes or the air supply pipe supply air to the reducer powder in the powder storage container.

### Advantageous Effect of Invention

The marine engine exhaust gas purification system can be reduced in size by eliminating the need for a large-capacity solution tank and can be simplified in the overall configuration.

### Brief Description of Drawings

FIG. 1 is a schematic block diagram showing a marine engine exhaust gas purification system according to a first embodiment of the present invention.
FIG. 2 is a schematic cross-sectional view showing a powder storage tank in the marine engine exhaust gas purification system according to the first embodiment of the present invention.
FIG. 3 is a schematic cross-sectional view showing a powder storage tank in a marine engine exhaust gas purification system according to a second embodiment of the present invention.
FIG. 4 is a schematic cross-sectional view showing a powder storage tank in a marine engine exhaust gas purification system according to a third embodiment of the present invention.
FIG. 5 is a schematic block diagram showing a device configuration for an experiment on the relationship between a predetermined range of concentrations of high-concentration urea water and a height of urea powder stored in the powder storage tank.
FIG. 6 is a photograph showing the device configuration for the experiment.

### Description of Embodiments

### First Embodiment

A marine engine exhaust gas purification system 1 according to a first embodiment of the present invention will be described below with reference to the accompanying drawings.

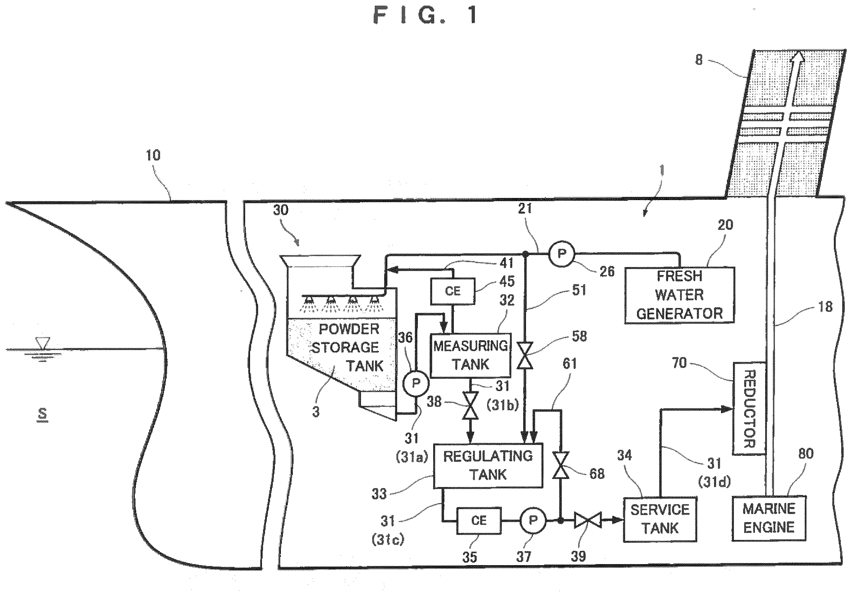

In a ship 10 including a fresh water generator (an example of a solvent refiner) 20, a marine engine 80, and a reductor 70, as shown in FIG. 1, the marine engine exhaust gas purification system 1 purifies exhaust gas from the marine engine 80 through reduction by the reductor 70.

The marine engine exhaust gas purification system 1 further includes a powder storage tank (powder storage container) 30 that stores urea powder (an example of reducer powder) 3 for the reduction, and a solvent feed line 21 that supplies water (an example of a solvent), which is refined from sea water S by the fresh water generator 20, to the powder storage tank 30.

The powder storage tank 30 produces high-concentration urea water by dissolving the urea powder 3 in water supplied through the solvent feed line 21. In other words, high-concentration urea water is produced by dissolving the urea powder 3 in water supplied into the powder storage tank 30 through the solvent feed line 21.

Subsequently, the marine engine exhaust gas purification system 1 produces regulated urea water (an example of a regulated solution, high-concentration urea water with a regulated concentration) in a regulating tank 33 (an example of a regulating container) from high-concentration urea water produced by the powder storage tank 30. The marine engine exhaust gas purification system 1 further includes a urea water feed line (an example of a solution feed line) 31 that supplies the regulated urea water to the reductor 70.

The reductor 70 reduces the exhaust gas by supplying the regulated urea water, which is supplied through the urea water feed line 31, to the exhaust gas. Specifically, the reductor 70 is provided on an exhaust gas line 18 that supplies exhaust gas from the marine engine 80 to a funnel 8 of the ship 10. The reductor 70 purifies exhaust gas in the exhaust gas line 18 through reduction by the regulated urea water.

The urea water feed line 31 has, from the upstream side, a measuring tank 32 (an example of a measuring container) that measures the concentration of high-concentration urea water, the regulating tank 33 that produces regulated urea water from high-concentration urea water by regulating the concentration of the high-concentration urea water through dilution, and a service tank 34 that stores regulated urea water to be supplied to the reductor 70. Specifically, the urea water feed line 31 includes a first urea water feed line 31a (an example of a first solution feed line) that connects the powder storage tank 30 and the measuring tank 32, a second urea water feed line 31b (an example of a second solution feed line) that connects the measuring tank 32 and the regulating tank 33, a third urea water feed line 31c (an example of the upstream side of a regulated solution feed line) that connects the regulating tank 33 and the service tank 34, and a fourth urea water feed line 31d (an example of the downstream side of the regulated solution feed line) that connects the service tank 34 and the reductor 70. The regulating tank 33 and the reductor 70 may be directly connected via the third urea water feed line 31c in the absence of the service tank 34.

The marine engine exhaust gas purification system 1 further includes a circulating line 41 that allows high-concentration urea water in the measuring tank 32 to return to the powder storage tank 30, and a dilution line 51 that branches from the solvent feed line 21 so as to supply water, which is refined from the sea water S by the fresh water generator 20, to the regulating tank 33.

The measuring tank 32 returns high-concentration urea water as a solvent to the powder storage tank 30 through the circulating line 41 when the measured concentration of the high-concentration urea water is lower than a predetermined range. Thus, the circulating line 41 has a circulation concentration meter 45 that measures the concentration of high-concentration urea water in the measuring tank 32. The second urea water feed line 31b has a transport valve 38 that is opened when a concentration measured by the circulation concentration meter 45 is not lower than the predetermined range. The predetermined range includes a concentration value where exhaust gas from the marine engine 80 is suitably reduced by high-concentration urea water through a chemical reaction. The regulated urea water is high-concentration urea water having a concentration within the predetermined range.

The regulating tank 33 dilutes high-concentration urea water with water from the dilution line 51 if the concentration of the high-concentration urea water exceeds the predetermined range. Thus, the third urea water feed line 31c has a regulating concentration meter 35 that measures the concentration of high-concentration urea water in the regulating tank 33. Moreover, the dilution line 51 has a dilution valve 58 that controls the flow rate of water necessary for the dilution.

In order to reliably set the concentration of high-concentration urea water, which is supplied to the service tank 34, within the predetermined range, that is, in order to reliably produce regulated urea water from high-concentration urea water to be supplied to the service tank 34, the marine engine exhaust gas purification system 1 has a concentration regulation line 61 that branches from the third urea water feed line 31c. The concentration regulation line 61 returns high-concentration urea water to the regulating tank 33 if the high-concentration urea water has a concentration outside the predetermined range because of insufficient or excessive dilution. Thus, the concentration regulation line 61 has a concentration regulation valve 68 that is opened/closed if a concentration is measured outside/inside the predetermined range by the regulating concentration meter 35. Moreover, a delivery valve 39 is provided downstream of the branch point of the third urea water feed line 31c and the concentration regulation line 61. The delivery valve 39 is closed/opened if a concentration is measured outside/inside the predetermined range by the regulating concentration meter 35.

The lines 21 and 31 have multiple pumps 26, 36, and 37 for transporting water or high-concentration urea water. Specifically, the pumps include the water pump 26 provided upstream of the branch point of the solvent feed line 21 and the dilution line 51, the unregulated-liquid pump 36 provided on the first urea water feed line 31a, and the regulated-liquid pump 37 provided upstream of the branch point of the third urea water feed line 31c and the concentration regulation line 61.

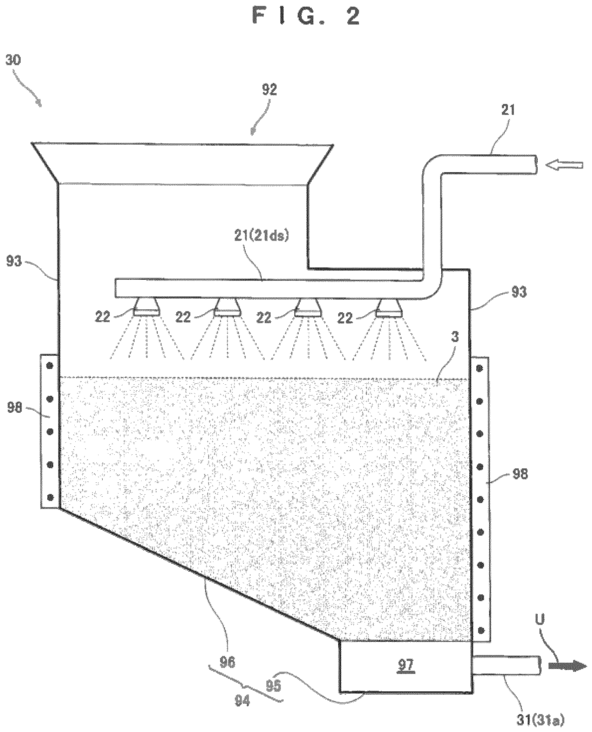

Referring to FIG. 2, the powder storage tank 30 will be specifically described below.

As shown in FIG. 2, the powder storage tank 30 includes a hopper 92 that receives the urea powder 3, and sides 93 and a bottom 94 that store the urea powder 3 received from the hopper 92. The bottom 94 includes a lowermost part 95 at the lowest position and an inclined bottom part 96 directed downward to the lowermost part 95. In the powder storage tank 30, the solvent feed line 21 has a downstream end 21ds that is horizontally extended above the urea powder 3 in the powder storage tank 30. The downstream end 21ds of the solvent feed line 21 has a plurality of sprinklers (e.g., shower heads) 22. Around the external of the sides 93 of the powder storage tank 30, a temperature controller (e.g., a heater and/or a cooler) 98 is provided to control an internal temperature. The temperature controller 98 controls the temperature so as to accelerate dissolution of the urea powder 3 in water mainly through heating, and controls the temperature so as to prevent generation of poisonous gas from the urea powder 3 mainly through cooling. Moreover, the lowermost part 95 of the powder storage tank 30 is connected to an upstream end of the urea water feed line 31 via a filter 97. The filter 97 does not allow passage of the urea powder 3 but allows passage of high-concentration urea water U.

A method of using the marine engine exhaust gas purification system 1 will be described below.

In the ship 10 in preparation for sailing, the urea powder 3 is supplied into the powder storage tank 30. Subsequently, water necessary for sailing is refined from the sea water S by the fresh water generator 20 in the ship 10 during sailing. As shown in FIG. 1, the water is partially supplied to the powder storage tank 30 through the solvent feed line 21.

In the powder storage tank 30, as shown in FIG. 2, the sprinklers 22 provided on the downstream end 21ds of the solvent feed line 21 dispersedly spray water onto the urea powder 3. The water penetrates from the top surface to the bottom of the urea powder 3. In this process, the urea powder 3 dissolves into the high-concentration urea water U. The high-concentration urea water U is guided to the lowermost part 95 directly or through the inclined bottom part 96 and then is guided to the urea water feed line 31 through the filter 97.

As shown in FIG. 1, the high-concentration urea water U of the powder storage tank 30 is first supplied into the measuring tank 32 through the first urea water feed line 31a. If the high-concentration urea water U of the measuring tank 32 has a concentration lower than the predetermined range, the high-concentration urea water U is returned to the powder storage tank 30 through the circulating line 41, whereas if the concentration is not lower than the predetermined range, the high-concentration urea water U is supplied into the regulating tank 33 through the second urea water feed line 31b. The high-concentration urea water U returned to the powder storage tank 30 is dispersedly sprayed as a solvent again onto the urea powder 3 by the sprinklers 22. Whereas, if the high-concentration urea water U supplied into the regulating tank 33 has a concentration higher than the predetermined range, the high-concentration urea water U is diluted with water from the dilution line 51. If the high-concentration urea water U has a concentration outside the predetermined range because of insufficient or excessive dilution, the high-concentration urea water U is returned to the regulating tank 33 again through the concentration regulation line 61. Whereas, if the high-concentration urea water U in the regulating tank 33 has a concentration within the predetermined range, that is, if the high-concentration urea water U in the regulating tank 33 is diluted into regulated urea water, the regulated urea water is supplied into the service tank 34 through the third urea water feed line 31c. The service tank 34 stores a certain amount of regulated urea water that is to be partially supplied into the reductor 70 through the fourth urea water feed line 31d. In the reductor 70, a spray of regulated urea water is supplied to the exhaust gas of the exhaust gas line 18 to purify the exhaust gas through reduction. The purified gas is then discharged from the funnel 8.

Thus, the marine engine exhaust gas purification system 1 eliminates the need for a device for preventing deposition of the urea powder 3 in the powder storage tank 30 and the need for a solution tank and an agitation system that mix the urea powder 3 and water. This can achieve a small size and simplify the overall configuration of the purification system.

The high-concentration urea water U having a concentration lower than the predetermined range is returned as a solvent to the powder storage tank 30 by the measuring tank 32 and the circulating line 41. This can efficiently produce the high-concentration urea water U (that is, regulated urea water) having a concentration within the predetermined range. In other words, high efficiency can be obtained in the overall system.

Moreover, the high-concentration urea water U (that is, regulated urea water) having a concentration within the predetermined range can be efficiently produced using the regulating tank 33, the dilution line 51, and the concentration regulation line 61. In other words, high efficiency can be obtained in the overall system.

Furthermore, the temperature of the powder storage tank 30 is controlled so as to accelerate dissolution of the urea powder 3 in water and prevent generation of poisonous gas. This can increase efficiency in the overall system and improve safety.

### Second Embodiment

A marine engine exhaust gas purification system 1 according to a second embodiment of the present invention is different from the marine engine exhaust gas purification system 1 according to the first embodiment in the interior of a powder storage tank 30.

A powder storage tank 30, which is different from that of the first embodiment, will be mainly discussed below. The same configurations as those of the first embodiment are indicated by the same reference numerals and the explanation thereof is omitted.

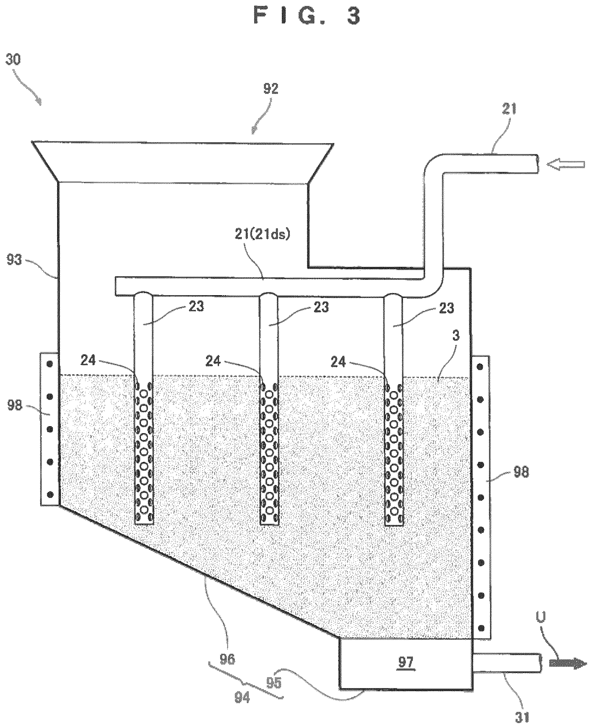

In the marine engine exhaust gas purification system 1 according to the second embodiment of the present invention, as shown in FIG. 3, the powder storage tank 30 contains a plurality of penetration pipes 23 that are connected instead of sprinklers 22 to a downstream end 21ds of a solvent feed line 21.

The penetration pipes 23 are extended from the top surface to the bottom of the urea powder 3. Moreover, the penetration pipe 23 has a large number of openings 24 for penetration of water from the top surface to the bottom of the urea powder 3.

The penetration pipes 23 allow penetration of water from the intermediate part and the bottom of urea powder 3 as well as the top surface of the urea powder 3. This accelerates dissolution of the urea powder 3 in water.

The marine engine exhaust gas purification system 1 according to the second embodiment further accelerates dissolution of the urea powder 3 in water, achieving higher efficiency in the overall system.

### Third Embodiment

A marine engine exhaust gas purification system 1 according to a third embodiment of the present invention is different from the marine engine exhaust gas purification system 1 according to the first embodiment in an inclined bottom part 96 of a powder storage tank 30.

The inclined bottom part 96 of the powder storage tank 30, which is different from that of the first embodiment, will be mainly discussed below. The same configurations as those of the first embodiment are indicated by the same reference numerals and the explanation thereof is omitted.

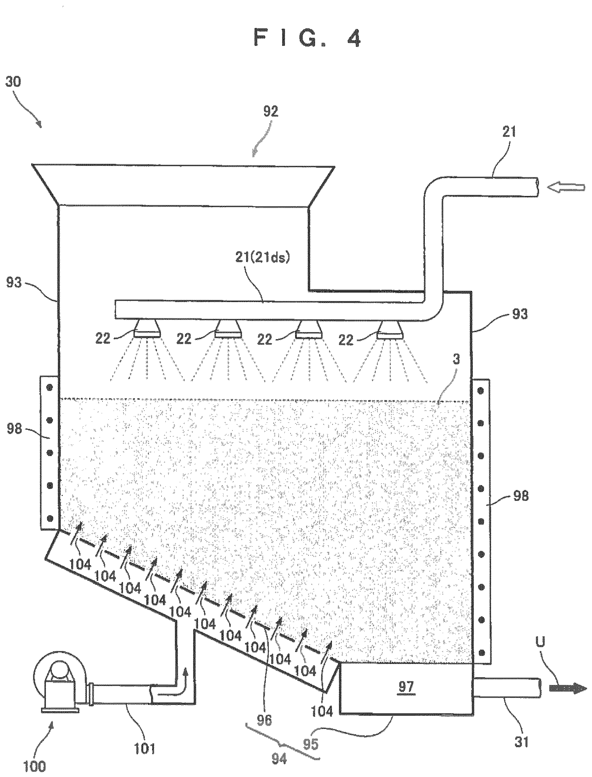

In the marine engine exhaust gas purification system 1 according to the third embodiment of the present invention, as shown in FIG. 4, air for stirring powder (hereinafter will be simply referred to as air) is supplied from the inclined bottom part 96 of the powder storage tank 30. In other words, aeration is applicable.

Specifically, as shown in FIG. 4, the marine engine exhaust gas purification system 1 has a large number of air holes 104 that pass the air through the inclined bottom part 96, a blower 100 provided outside the powder storage tank 30, and an air pipe 101 connecting the blower 100 to the inclined bottom part 96.

With this configuration, the air is supplied into the powder storage tank 30 from the blower 100 through the air pipe 101 and the inclined bottom part 96. The air supply, that is, aeration forms a water penetration space in urea powder 3, further accelerating dissolution in water.

Thus, the marine engine exhaust gas purification system 1 according to the third embodiment further accelerates dissolution of the urea powder 3 in water, thereby improving efficiency in the overall system.

In the first to third embodiments, the urea powder 3 was described as an example of reducer powder. The present invention is not limited to the urea powder as long as exhaust gas can be reduced by a solution containing a dissolved solvent.

Moreover, in the first to third embodiments, water was described as an example of a solvent. The present invention is not limited to the solvent as long as reducer powder is dissolved by liquid.

The second and third embodiments may be combined as another embodiment of the present invention.

In the third embodiment, air is supplied into the urea powder 3 in the powder storage tank 30 having the multiple air holes 104 on the inclined bottom part 96. Alternatively, an air supply pipe having a large number of openings may be disposed in the powder storage tank 30 (for example, like the penetration pipe 23 of the second embodiment shown in FIG. 3).

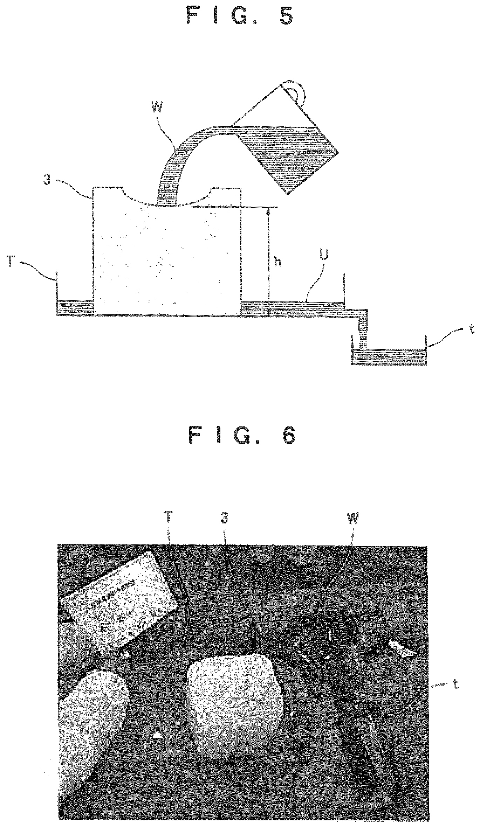

In the first and third embodiments, the relationship between the predetermined range of concentrations of the high-concentration urea water U and the height of the urea powder 3 stored in the powder storage tank 30 was not specifically discussed. For example, in the case of the predetermined range of at least 40% (mass concentration), the urea powder 3 preferably has a height of at least 10 cm. Thus, the high-concentration urea water U having a concentration of at least 40% (that is, within the predetermined range) is not returned to the powder storage tank 30 through the circulating line 41. This can efficiently produce the high-concentration urea water U (that is, regulated urea water) having a concentration within the predetermined range. In other words, high efficiency can be obtained in the overall system. The relationship between the predetermined range of 40% (mass concentration) and the height of the urea powder 3, that is, at least 10 cm was identified by the following experiment: as shown in FIGS. 5 and 6, a liter of water W was slowly poured from above onto a lump of the urea powder 3 on a tray T. The water W penetrated the lump of the urea powder 3 from the top surface to the bottom. In this process, the urea powder 3 dissolved into the high-concentration urea water U to be accumulated in the tray T. The accumulated high-concentration urea water U in the tray T was extracted into another small tray t, and then the concentration of the high-concentration urea water U was measured by a portable urea-water concentration meter (PAL-Urea, ATAGO CO., LTD.). For heights h of 10 cm, 15 cm, and 20 cm of the lump of the urea powder 3, concentrations of 40.5%, 41.0%, and 45.3% were measured, respectively.

## Claims

1. A marine engine exhaust gas purification system for purifying exhaust gas from a marine engine (80) through reduction by a reductor (70) of a ship (10) including a solvent refiner (20), the marine engine (80), and the reductor (70),
the purification system comprising:
a powder storage container (30) that stores reducer powder (3) for the reduction;
a solvent feed line (21) that supplies, into the powder storage container (30), a solvent refined by the solvent refiner (20),
the powder storage container (30) allowing production of a high concentration solution by dissolving the reducer powder (3) in the solvent supplied through the solvent feed line (21),
the powder storage container (30) connecting, from an upstream side, a measuring container (32) that measures a concentration of the high concentration solution, and a regulating container (33) that regulates the concentration of the high concentration solution so as to produce a regulated solution from the high concentration solution,
a first solution feed line (31a) that supplies the high concentration solution produced by the powder storage container (30) to the measuring container (32),
a second solution feed line (31b) that supplies the high concentration solution of the measuring container (32) to the regulating container (33),
a regulated solution feed line (31c, 31d) that supplies the regulated solution of the regulating container (33) to the reductor (70), and
the reductor (70) reducing the exhaust gas by supplying the regulated solution to the exhaust gas, the regulated solution being supplied through the regulated solution feed line (31c, 31d).

2. The marine engine exhaust gas purification system according to claim 1, further comprising a circulating line (41) that allows the high concentration solution in the measuring container (32) to return to the powder storage container (30); and
a dilution line (51) that allows supply of the solvent refined by the solvent refiner (20) to the regulating container (33),
wherein if the measured high concentration solution has a concentration lower than a predetermined range, the measuring container (32) is adapted to return the high concentration solution to the powder storage container (30) through the circulating line (41), and
if the high concentration solution has a concentration higher than the predetermined range, the regulating container (33) is adapted to dilute the high concentration solution with the solvent from the dilution line (51).

3. The marine engine exhaust gas purification system according to one of claims 1 and 2, wherein the powder storage container (30) includes a temperature controller (98) that controls a temperature in the powder storage container (30), and
the temperature controller (98) is adapted to keep an interior of the powder storage container (30) at a temperature where dissolution of the reducer powder in the solvent is accelerated and generation of poisonous gas from the reducer powder is prevented.

4. The marine engine exhaust gas purification system according to one of claims 1 and 2, further comprising a penetration pipe (23) that is connected to the solvent feed line (21) in the powder storage container (30) causing the solvent to penetrate the reducer powder (3),
the penetration pipe (23) extending from a top surface to a bottom of the reducer powder (3) in the powder storage container (30), and
the penetration pipe (23) having a large number of openings (24) for penetration of the solvent from the top surface to the bottom of the reducer powder (3).

5. The marine engine exhaust gas purification system according to one of claims 1 and 2, wherein the powder storage container (30) has a large number of air holes (104) or an air supply pipe, and
the air holes (104) or the air supply pipe supply air to the reducer powder (3) in the powder storage container (30).

## Patentansprüche

1. Abgas-Reinigungssystem für Schiffsmotoren zum Reinigen von Abgas von einem Schiffsmotor (80) über Reduktion mit einem Reduktor (70) eines Schiffs (10), das eine Lösungsmittel-Aufbereitungseinrichtung (20), den Schiffsmotor (80) und den Reduktor (70) enthält,
wobei das Reinigungssystem umfasst:
einen Pulver-Aufbewahrungsbehälter (30), in dem Reduktionsmittel-Pulver (3) für die Reduktion aufbewahrt wird;
eine Lösungsmittel-Zuführleitung (21), die dem Pulver-Aufbewahrungsbehälter (30) ein durch die Lösungsmittel-Aufbereitungseinrichtung (20) aufbereitetes Lösungsmittel zuführt,
wobei der Pulver-Aufbewahrungsbehälter (30) Erzeugung einer hochkonzentrierten Lösung durch Auflösen des Reduktionsmittel-Pulvers (3) in dem über die Lösungsmittel-Zuführleitung (21) zugeführten Lösungsmittel ermöglicht,
der Pulver-Aufbewahrungsbehälter (30) von einer stromauf liegenden Seite her in Verbindung mit einem Mess-Behälter (32), der eine Konzentration der hochkonzentrierten Lösung misst, sowie einem Regulier-Behälter (33) steht, der die Konzentration der hochkonzentrierten Lösung reguliert, um aus der hochkonzentrierten Lösung eine regulierte Lösung zu erzeugen,
eine erste Lösungs-Zuführleitung (31a), die die durch den Pulver-Aufbewahrungsbehälter (30) erzeugte hochkonzentrierte Lösung dem Mess-Behälter (32) zuführt,
eine zweite Lösungs-Zuführleitung (31b), die die hochkonzentrierte Lösung des Mess-Behälters (32) dem Regulier-Behälter (33) zuführt,
eine Zuführleitung (31c, 31d) für regulierte Lösung, die die regulierte Lösung des Regulier-Behälters (33) dem Reduktor (70) zuführt, und
wobei der Reduktor (70) das Abgas reduziert, indem er dem Abgas die regulierte Lösung zuführt, wobei die regulierte Lösung über die Zuführleitung (31c, 31d) für regulierte Lösung zugeführt wird.

2. Abgas-Reinigungssystem für Schiffsmotoren nach Anspruch 1, das des Weiteren eine Umlauf-Leitung (41) umfasst, die Rückführung der hochkonzentrierten Lösung in dem Mess-Behälter (32) zu dem Pulver-Aufbewahrungsbehälter (30) ermöglicht; und
eine Verdünnungs-Leitung (51), die Zufuhr des durch die Lösungsmittel-Aufbereitungseinrichtung (20) aufbereiteten Lösungsmittels zu dem Regulier-Behälter (33) ermöglicht,
wobei der Mess-Behälter (32) so eingerichtet ist, dass er, wenn die gemessene hochkonzentrierte Lösung eine Konzentration hat, die unter einem vorgegebenen Bereich liegt, die hochkonzentrierte Lösung über die Umlauf-Leitung (41) zu dem Pulver-Aufbewahrungsbehälter (30) zurückführt, und
der Regulier-Behälter (33) so eingerichtet ist, dass er, wenn die hochkonzentrierte Lösung eine Konzentration hat, die über dem vorgegebenen Bereich liegt, die hochkonzentrierte Lösung mit dem Lösungsmittel aus der Verdünnungs-Leitung (51) verdünnt.

3. Abgas-Reinigungssystem für Schiffsmotoren nach einem der Ansprüche 1 und 2, wobei der Pulver-Aufbewahrungsbehälter (30) eine Temperatur-Steuerungseinrichtung (98) enthält, die eine Temperatur in dem Pulver-Aufbewahrungsbehälter (30) steuert, und
die Temperatur-Steuerungseinrichtung (98) so eingerichtet ist, dass sie einen Innenraum des Pulver-Aufbewahrungsbehälters (30) auf einer Temperatur hält, bei der Auflösung des Reduktionsmittels-Pulvers in dem Lösungsmittel beschleunigt wird und Erzeugung von toxischem Gas aus dem Reduktionsmittel-Pulver verhindert wird.

4. Abgas-Reinigungssystem für Schiffsmotoren nach einem der Ansprüche 1 und 2, das des Weiteren ein Tränk-Rohr umfasst, das mit der Lösungsmittel-Zuführleitung (21) in dem Pulver-Aufbewahrungsbehälter (30) verbunden ist und bewirkt, dass das Reduktionsmittel-Pulver (3) mit dem Lösungsmittel durchtränkt wird,
wobei sich das Tränk-Rohr (23) von einer Oberseite zu einer Unterseite des Reduktionsmittel-Pulvers (3) in dem Pulver-Aufbewahrungsbehälter (30) erstreckt, und
das Tränk-Rohr (23) eine große Anzahl an Öffnungen (24) aufweist, über die das Lösungsmittel von der Oberseite zu der Unterseite des Reduktionsmittel-Pulvers (3) eindringt.

5. Abgas-Reinigungssystem für Schiffsmotoren nach einem der Ansprüche 1 und 2, wobei der Pulver-Aufbewahrungsbehälter (30) eine große Anzahl an Luftlöchern (104) oder ein Luft-Zuführrohr aufweist, und
die Luftlöcher (104) oder das Luft-Zuführrohr (23) dem Reduktionsmittel-Pulver (3) in dem Pulver-Aufbewahrungsbehälter (30) Luft zuführen/zuführt.

## Revendications

1. Système de purification des gaz d'échappement d'un moteur marin permettant d'épurer les gaz d'échappement d'un marine moteur (80) par réduction par un réducteur (70) d'un navire (10) comprenant un raffineur de solvant (20), le moteur marin (80) et le réducteur (70),
le système de purification comprenant:
un récipient de stockage de poudre (30) qui stocke la poudre de réduction (3) pour la réduction;
une ligne d'alimentation en solvant (21) qui introduit dans le récipient de stockage de poudre (30) un solvant raffiné par le raffineur de solvant (20),
le récipient de stockage de poudre (30) permettant la production d'une solution à haute concentration en dissolvant la poudre de réduction (3) dans le solvant fourni par la conduite d'alimentation en solvant (21),
le récipient de stockage de poudre (30) reliant, d'un côté amont, un récipient de mesure (32) qui mesure une concentration de la solution à concentration élevée, et un récipient de régulation (33) qui régule la concentration de la solution à concentration élevée de manière à produire une solution régulée de la solution à haute concentration,
une première ligne d'alimentation en solution (31a) qui fournit la solution à haute concentration produite par le récipient de stockage de poudre (30) au récipient de mesure (32),
une seconde ligne d'alimentation en solution (31b) qui fournit la solution à haute concentration au récipient de mesure (32) au récipient de régulation (33),
une ligne d'alimentation en solution régulée (31c, 31d) qui alimente la solution régulée du récipient de régulation (33) vers le réducteur (70), et
le réducteur (70) réduisant les gaz d'échappement en alimentant la solution régulée en gaz d'échappement, la solution régulée étant alimentée par la ligne d'alimentation en solution régulée (31c, 31d).

2. Système d'épuration des gaz d'échappement de moteur marin selon la revendication 1, en outre comprenant une ligne de circulation (41) qui permet à la solution de haute concentration dans le récipient de mesure (32) de retourner dans le récipient de stockage de poudre (30); et
une ligne de dilution (51) permettant l'alimentation du solvant raffiné par le raffineur de solvant (20) dans le récipient de régulation (33),
dans lequel, si la solution à haute concentration mesurée a une concentration inférieure à une plage prédéterminée, le récipient de mesure (32) est conçu pour renvoyer la solution à haute concentration dans le récipient de stockage de poudre (30) par la ligne de circulation (41), et
si la solution à haute concentration a une concentration supérieure à la plage prédéterminée, le récipient de régulation (33) est conçu pour diluer la solution à haute concentration avec le solvant provenant de la ligne de dilution (51).

3. Système d'épuration des gaz d'échappement d'un moteur marin selon l'une des revendications 1 et 2,
dans lequel le récipient de stockage de poudre (30) comprend un régulateur de température (98) qui régule une température dans le récipient de stockage de poudre (30), et
le régulateur de température (98) est conçu pour maintenir un intérieur du récipient de stockage de poudre (30) à une température où la dissolution de la poudre de réduction dans le solvant est accélérée et la production de gaz toxique à partir de la poudre de réduction est empêchée.

4. Système d'épuration des gaz d'échappement d'un moteur marin selon l'une des revendications 1 et 2,
comprenant en outre un tuyau de pénétration (23) qui est connecté à la ligne d'alimentation en solvant (21) dans le récipient de stockage de poudre (30) provoquant la pénétration du solvant dans la poudre de réduction (3),
le tuyau de pénétration (23) s'étendant d'une surface supérieure au fond de la poudre de réduction (3) dans le récipient de stockage de poudre (30), et le tuyau de pénétration (23) présente un grand nombre d'ouvertures (24) pour la pénétration du solvant de la surface supérieure au fond de la poudre de réduction (3).

5. Système d'épuration des gaz d'échappement d'un moteur marin selon l'une des revendications 1 et 2,
dans lequel le récipient de stockage de poudre (30) comporte un grand nombre de trous d'air (104) ou un tuyau d'alimentation en air, et
les trous d'air (104) ou le tuyau d'alimentation en air fournissent de l'air à la poudre de réduction (3) dans le réservoir de stockage de poudre (30).
